# EUROPEAN PATENT SPECIFICATION

(11) **EP 3 545 143 B1**
(45) Date of publication and mention of the grant of the patent: **19.10.2022**
(21) Application number: 17874619.4
(22) Date of filing: 22.11.2017
(51) Int. Cl.: E03F 5/04, A47K 3/28, E03B 1/04, E03C 1/00

(54) **A DRAIN FOR A WATER RECYCLING DEVICE**
ABFLUSS FÜR EINE WASSERRECYCLINGVORRICHTUNG
DRAIN POUR DISPOSITIF DE RECYCLAGE D'EAU

(30) Priority: 25.11.2016 SE 1651547
(43) Date of publication of application: 02.10.2019
(73) Proprietor: Orbital Systems AB, 211 20 Malmö (SE)
(72) Inventor: RIDELL, Michael, 245 42 Staffanstorp (SE); BODEN, Richard, 211 58 Malmö (SE); SÖDERBERG, Tobias, 254 35 Helsingborg (SE)
(74) Representative: AWA Sweden AB
(86) International application number: PCT/SE2017/051157
(87) International publication number: WO 2018/097788

(56) References cited:
- WO-A1-2015/094107
- WO-A1-2015/094109
- DE-A1- 4 124 605
- DE-A1- 19 741 827
- DE-B4- 19 741 827
- GB-A- 1 208 431
- JP-A- 2014 139 393
- US-A- 5 293 654
- US-A- 5 293 654
- US-A1- 2009 272 447
- US-A1- 2011 146 800
- US-A1- 2011 146 800
- US-A1- 2013 212 800
- US-A1- 2015 344 323
- US-A1- 2016 153 180
- US-A1- 2016 312 447

## Description

### Technical field

The apparatuses and methods described herein generally relates to water recycling. More particularly, a drain for a water recycling device is presented.

### Background

In many parts of the world, clean water is becoming a scarce commodity. Consequently, systems for purification and recycling of water has found applications across many fields. Conventional water recycling devices can be effective, but is often costly, and requires frequent maintenance and major modifications to existing piping.

An important part of a water recycling device is the drain collecting the used water to be recycled. Such a drain must be capable of directing water to the water recycling device while conforming to a number of requirements set out for conventional drains used to collect water. The drain must also be able to reliably provide water to the water recycling device.

Examples of drain arrangements in a water recycling apparatuses are known from e.g. DE4124605 and US patent application No. 12/996,385.

However, there is still a need for improved drains for water recycling devices in terms of reliability, cost, ease of installation, and maintenance.

In US 2011/146800 there is disclosed a domestic water recycling system using a combination of an optical detector to detect certain smaller sized (non-filtered) contaminants and a filter to remove larger sized (filtered) contaminants. Furthermore, in US 5,293,654 there is disclosed a shower assembly having a spray nozzle through which liquid flows into a shower cabinet. In DE19741827 there is disclosed a bath drain fitting. In the device, a siphon forms an odor trap. Neither of the documents above presents a drain arrangement such as according to the present invention, which is further described below.

Moreover, in both WO2015/094109 and WO2015/094107 there are shown recirculating showers. Neither of these describe a drain arrangement such as according to the present invention, and which is further described below.

### Summary of the invention

It is an object of the present inventive concept to mitigate, alleviate or eliminate one or more of the above-identified deficiencies in the art and disadvantages singly or in combination.

According to a first aspect of the inventive concept, these and other objects are achieved in full, or at least in part, by a drain for a water recycling device, the drain comprising a drain inlet configured to receive used water from an outlet of the water recycling device; a water buffer configured to hold a volume of water, wherein the water buffer comprises an outer wall element and a bottom surface; a recycling pipe comprising an recycling pipe intake, the recycling pipe intake comprising an open end, wherein the recycling pipe and the recycling pipe intake are configured to receive used water to be recycled from the water buffer; and a buffer outlet configured to output water from the water buffer.

According to the invention the drain comprises a number of angled flaps arranged in the water buffer such that water received by the water buffer via the drain inlet is set in a circular motion in the water buffer.

The drain may comprise a diverter configured to divert the used water to the water buffer, and to prevent the used water from entering the buffer outlet without passing the water buffer.

The diverter may comprise a surface arranged above the buffer outlet with respect to gravity when the drain is in use.

The surface may be arranged such that a projection of the surface along a direction of gravity when the drain is in use at least partially covers the buffer outlet.

The surface may be arranged to extend at least partially in a direction of gravity when the drain is in use such that water on the surface is directed towards the water buffer.

The open end of the recycling pipe intake may be directed towards the bottom surface of the water buffer.

An upper end of the open end of the recycling pipe intake may be arranged in line with or below an upper end of the outer wall element with respect to gravity when the drain is in use.

The outer wall element and/or the bottom surface may be arranged to form a barrier preventing the volume of water from entering the buffer outlet.

The water buffer further may comprise an inner wall element, wherein the outer wall element and/or the bottom surface and/or the inner wall element are arranged to form a barrier preventing the volume of water from entering the buffer outlet.

An upper end of the open end of the recycling pipe may be arranged in line with or below an upper end of the inner wall element with respect to gravity when the drain is in use.

The water buffer may have a circular cross section when viewed along the direction of gravity when the drain is in use.

The recycling pipe intake may at least partially enclose the buffer outlet.

The water buffer may comprise a draining channel configured to allow a flow of water from the water buffer to the buffer outlet.

The recycling pipe intake may comprise a pre-filter.

The drain may comprise a sensor arrangement configured to measure a water quality parameter in water in the water buffer.

According to a second aspect of the inventive concept, these and other objects are achieved in full, or at least in part, by a water recycling device comprising an outlet configured to output treated water; a drain according to first aspect of the invention for collecting used water output from the outlet; a drain discard path arranged downstream of the drain; a recirculation loop in liquid communication with the drain and the outlet, the recirculation loop comprising a water treatment arrangement for treating the used water; and a circulation pump for providing a flow in the water recycling device.

The water recycling device may be a shower.

According to a third aspect of the inventive concept, these and other objects are achieved in full, or at least in part, by a method for collecting water to be recycled in a drain of a water recycling device, the drain comprising: a drain inlet configured to receive used water from an outlet of the water recycling device; a water buffer configured to hold a volume of water, wherein the water buffer comprises an outer wall element and a bottom surface; a recycling pipe comprising an recycling pipe intake, wherein the recycling pipe is configured to receive used water to be recycled from the water buffer; and a buffer outlet; the drain being characterized in that it comprises a number of angled flaps arranged in the water buffer such that water received by the water buffer via the drain inlet is set in a circular motion in the water buffer; wherein the method comprises the steps of: collecting the used water in the water buffer; determining a water quality measure of the collected water; if the water quality measure of the collected water is above a quality threshold, feeding the collected water via the recycling pipe to the water recycling device; if the water quality measure of the collected water is below a quality threshold, allowing the collected water to flow via the buffer outlet to a drain discard path of the water recycling device.

Other objectives, features and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of different embodiments of the present inventive concept, with reference to the appended drawings, wherein:
FIG. 1 schematically illustrates an example of a water recycling device;
FIG. 2 schematically illustrates an example of a cross section of a drain;
FIG. 3 schematically illustrates an example of a cross section of a drain;
FIG. 4 schematically illustrates an example of a cross section of a drain;
FIG. 5 schematically illustrates an example of a top view of a drain;
FIG. 6 schematically illustrates an example of a top view of a drain;
FIG. 7 schematically illustrates an example of a top view of a drain;
FIG. 8 schematically illustrates an example of a bottom view of a water recycling inlet;
FIG. 9 is a flow chart diagram of a method for collecting water to be recycled in a drain of a water recycling device.

### Detailed description

The present disclosure describes a drain for a water recycling device. Initially, some terminology may be defined to provide clarification for the following disclosure.

The term 'drain' referred to in the present disclosure is not to be given the conventional meaning of a drain; a conventional drain is a fixture for that provides an exit-point for waste water. In the present disclosure, the term 'drain' may be exchanged for a collecting arrangement, a sensor tank, a recirculation tank, or a floor unit. The term 'drain' implies a point leading to a e.g. a sewage, but wherein the drain does in fact not form part of the sewage itself. As will be understood from the following disclosure, the water buffer may act as an interface between the recycling pipe and a drain discard path arranged downstream of the drain.

Throughout the disclosure, reference is made to used water. It is to be understood that a water recycling device may receive used water to be treated and recycled. Used water may thus pass a water treatment arrangement of the water recycling device, after which the used water may be referred to as treated water. Treated water leaving an output of the water recycling device may be referred to as used water. In other words, the moment treated water is emitted from the output of the water recycling device, it may be referred to as used water.

In general, it has been realized by the inventors that the reliability of a water recycling device in terms of water flow, hygienic conditions, and maintenance can be improved by a drain according to the present disclosure. More particularly, a drain wherein used water is held in a water buffer may allow for the used water to be analyzed with respect to water quality parameters before used water is drawn into a recirculation loop of the water recycling device. In addition, it may be advantageous if the water buffer holds a volume of water such that a recycling pump of the water recycling device can reliably draw water into the water recycling device.

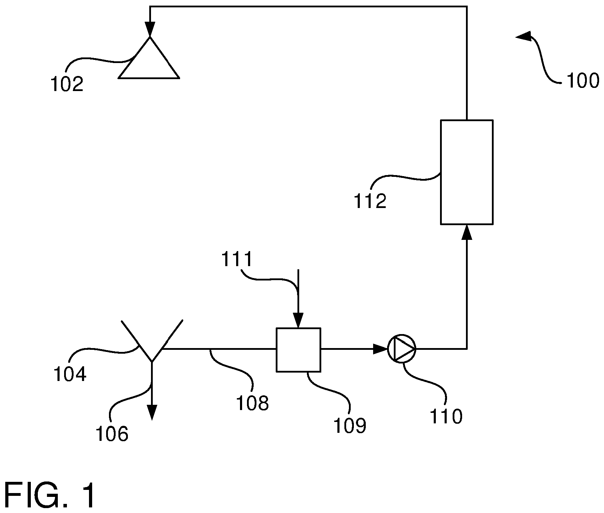

With reference to FIG. 1, an example of a water recycling device 100 is illustrated. The water recycling device 100 comprises an outlet 102 configured to output treated water, a drain 104 for collecting used water output from said outlet, a recirculation loop 108 in liquid communication with the drain 104 and the outlet 102, a valve arrangement 109, an external water path 111 in liquid communication with the valve arrangement 108, a circulation pump 110 for providing a flow in the water recycling device, and a water treatment arrangement 112. The external water path 111 may provide external water to the recirculation loop 108. The water treatment arrangement 112 may comprise a filter arrangement and/or a UV light treatment arrangement. The water treatment arrangement 112 may comprise at least one filter, such as a nanofilter, a microfilter, or a nanofilter and a microfilter. The water treatment arrangement 112 may comprise at least one particle filter and at least one microbiological filter. The water treatment arrangement 112 may comprise at least one active substance for reducing harmful effects of microorganisms in water passing the water treatment arrangement 112. Such an active substance may for example be contained within a filter media of the filter, and/or be released to the water inside the water treatment arrangement 112.

The water recycling device may be a shower. However, those skilled in the art will recognize that the drain according to the present disclosure can be implemented in a wide variety of water recycling devices without departing from the scope of the present inventive concept.

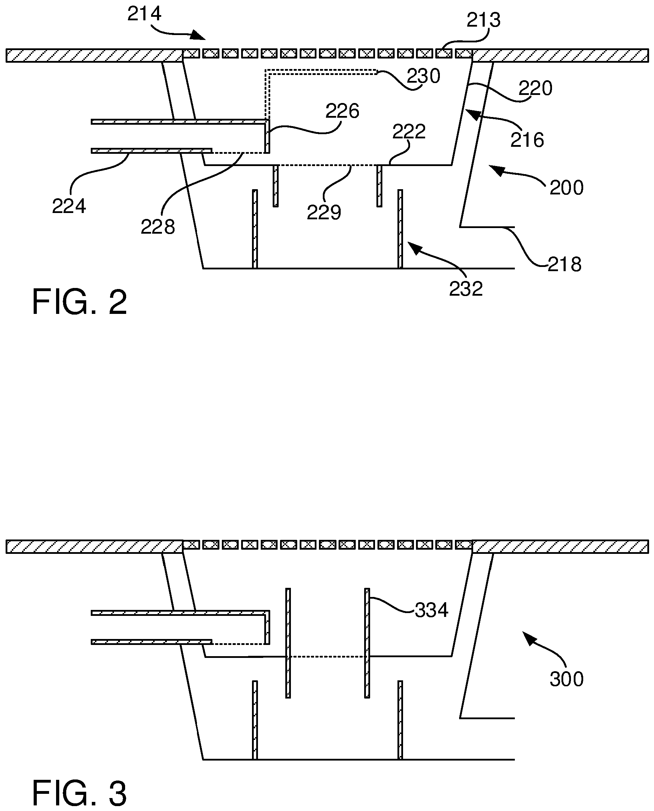

Referring now to FIG. 2, an example of a drain 200 for a water recycling device is illustrated. The drain 200 comprises a drain inlet 214 configured to receive used water from an outlet of the water recycling device. The used water may flow through the drain inlet 214 via a grating 213. The drain 200 further comprises a water buffer 216. The water buffer 216 may be arranged below the drain inlet 214 with respect to gravity when the drain 200 is in use. The water buffer 216 is configured to hold a volume of water, wherein the water may be for example used water. The water buffer 216 comprises an outer wall element 220 and a bottom surface 222. The drain 200 further comprises a recycling pipe 224 comprising a recycling pipe intake 226, the recycling pipe intake 226 comprising an open end 228. The recycling pipe intake 226 may be in liquid communication with the recirculation loop of the water recycling device. The recycling pipe intake 226 may comprise a pre-filter. The pre-filter may be a mesh filter. The pre-filter may be arranged in the open end 228. The pre-filter may provide for that particles in the used water are removed before the used water enters the recycling pipe 224 and the water recycling device. The recycling pipe 224 and recycling pipe intake 226 are configured to receive used water to be recycled from the water buffer.

The recycling pipe 224 and recycling pipe intake 226 may also be configured to output water into the water buffer 216. Consequently, the water buffer 216 is configured to hold a volume of water, wherein the water may be for example treated water and/or external water from an external water path connected to the recirculation loop of the water recycling device. An advantage with this arrangement is that the pre-filter of the recycling pipe intake 226 may be flushed. This may prevent particles from clogging the pre-filter. In particular, the pre-filter of the recycling pipe intake 226 may be backflushed. Thus, e.g. dirt, hair and the like which is flushed away from the pre-filter may be directed via the buffer outlet 229 and a drain discard path 218 to be removed from the water recycling device. Therefore, it may be advantageous to arrange the pre-filter in proximity of the drain discard path 218. Further, a volume of water in the water buffer 216 may be replaced with external water. Yet another advantage with this arrangement is that particles on the bottom surface 222 of the water buffer 216 may be removed from the water buffer 216 as a result of a flow of water entering the water buffer 216 from the recycling pipe 224.

The drain 200 further comprises a buffer outlet 229. The buffer outlet 229 may be configured to allow a flow of water from the water buffer 216 to a drain discard path 218. A water trap 232 may be arranged between the buffer outlet 229 and the drain discard path 218. Water entering the drain discard path 218 may be removed from the water recycling device. The buffer outlet 229 may be arranged substantially in a center of the water buffer 216.

Still referring to FIG. 2, the drain 200 may comprise a diverter 230. The diverter 230 may be configured to divert the used water received via the drain inlet 214 to the water buffer 216. The diverter 230 may be configured to prevent the used water from entering the buffer outlet 229 without passing the water buffer 216. The diverter 230 may comprise a surface arranged above the buffer outlet 229 with respect to gravity when the drain 200 is in use. The surface of the diverter 230 may be arranged such that a projection of the surface along a direction of gravity when the drain is in use at least partially covers the buffer outlet. In other words, the surface of the diverter 230 may be arranged such that water received via the drain inlet 214 is prevented from flowing directly into the buffer outlet 229. The surface of the diverter 230 may be arranged to extend at least partially in a direction of gravity when the drain 200 is in use such that water present on the surface is directed towards the water buffer 216. In other words, the surface of the diverter 230 may be arranged at an angle with respect to a direction of gravity when the drain 200 is in use, wherein the angle is not 90 degrees. The diverter may form part of the recycling pipe 224 and/or the recycling pipe intake 226.

The drain 200 may comprise a sensor arrangement configured to measure a water quality parameter in water in the water buffer 216. The sensor arrangement may be configured to determine a water quality measure of water. The sensor arrangement may be placed in the water buffer 216. The sensor arrangement may comprise an electrical conductivity sensor. The sensor arrangement may be configured to determine a temperature of water in the water buffer 216.

The drain 200 may comprise a water level sensor arrangement configured to determine a level of water in the water buffer 216.

The outer wall element 220 and/or the bottom surface 222 may be arranged to form a barrier preventing the volume of water held by the water buffer 216 from entering the buffer outlet 229. Consequently, a buffer of used water may be created in the water buffer 216. If the buffer of used water is to be recycled in the water recycling device, a recirculation pump may draw the used water in the water buffer 216 into the water recycling device via the recycling pipe intake 226 and recycling pipe 224. On the other hand, if the buffer of used water is not to be recycled, used water received via the drain inlet 214 may be allowed to fill the water buffer 216 until a water level overcomes the barrier, such that used water is directed via the buffer outlet 229 to the drain discard path 218.

The recycling pipe intake 226 may be arranged below the buffer outlet 229 with respect to gravity when the drain is in use. Hereby, the buffer outlet does not necessarily need to be equipped with a valve in order to restrict a flow of water from the water buffer 216 to the drain discard path 218, and to allow water to fill the water buffer 216 such that water can be drawn into the recycling pipe 224.

The recycling pipe 224 may form part of the barrier preventing the volume of water held by the water buffer 216 from entering the buffer outlet 229. In particular, the recycling pipe intake 226 may form part of the barrier preventing the volume of water held by the water buffer 216 from entering the buffer outlet 229. Hereby, used water may be prevented from being recycled into the water recycling device when the recycling pipe 224 is not installed in the drain 200. This arrangement may also be advantageous in a scenario where the recycling pipe intake 226 comprises a pre-filter as described above, since the barrier preventing the volume of water held by the water buffer 216 from entering the buffer outlet 229 is formed only when the recycling pipe intake 226, and thus the pre-filter, is installed correctly.

Surfaces of the drain 200 intended to be in direct contact with water may comprise mechanical and/or chemical properties such that dirt and/or microorganisms are less likely to attach to the surfaces.

The recycling pipe 224 may be connected to the water recycling device via a detachable connection. The detachable connection may be sealed with an o-ring.

The water buffer 216 may comprise a draining channel (not shown). The draining channel may be arranged on the bottom surface 222, and/or on the outer wall element 220, and/or on an inner wall element as described below. The draining channel may be arranged near a bottom of the water buffer 216, such that water in the water buffer 216 can be drained from the water buffer 216 via the buffer outlet 229. The draining channel may be in liquid communication with the buffer outlet 219. The draining channel may have a draining channel area providing for a flow of water out from the water buffer 216. The draining channel area may be adjusted to allow a flow rate similar to or lower than a flow rate of water flowing into the water buffer 216 via the drain inlet 214. The draining channel may provide for that the water buffer 216 can be completely emptied. By emptying the water buffer 216, a risk of microbiological growth may be decreased. More specifically, a risk of microbiological growth in the water buffer 216 may be decreased.

As can be seen in FIG. 2, the open end 228 of the recycling pipe intake 226 may be directed towards the bottom surface of the water buffer 216. Hereby, air may be prevented from entering the recycling pipe intake 226. An advantage with this arrangement, compared to e.g. a scenario wherein the open end 228 is directed away from the bottom surface of the water buffer 216, is that less water is needed in the water buffer 216 in order to be able to draw water into the recycling pipe intake 226 without also drawing air into the recycling pipe intake 226.

Referring now to FIG. 3, an example of a drain 300 for a water recycling device is shown. It is to be understood that the drain 300 may comprise any of the features described in conjunction with FIG. 2. The drain 300 may further comprise an inner wall element 334. The inner wall element 334 and/or the outer wall element and/or the bottom surface may be arranged to form a barrier preventing the volume of water held by the water buffer from entering the buffer outlet. The inner wall element 334 may extend downwards into a water trap, such that the inner wall element 334 forms a part of the water trap.

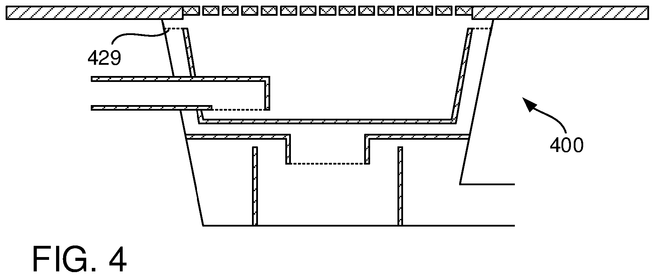

Referring now to FIG. 4, an example of a drain 400 is shown. It is to be understood that the drain 400 may comprise any of the features described in conjunction with FIG. 2 and FIG. 3. Here, the drain 400 comprises an outer wall element, wherein the buffer outlet 429 is arranged at the outer edge of the water buffer. In other words, used water held by the water buffer may rise to a water level above the outer wall element, such that the used water held by the water buffer is directed to a drain discard path arranged below the water buffer.

In conjunction with FIGS. 2-4, a drain wherein the recycling pipe is arranged inside the water buffer has been disclosed. In some examples, a water trap may be arranged below the water buffer. However, those skilled in the art will recognize that the recycling pipe may be arranged in the water trap. Used water may thus be drawn from the water trap into the water recycling device. In other words, in such an arrangement the water trap may be referred to as a water buffer.

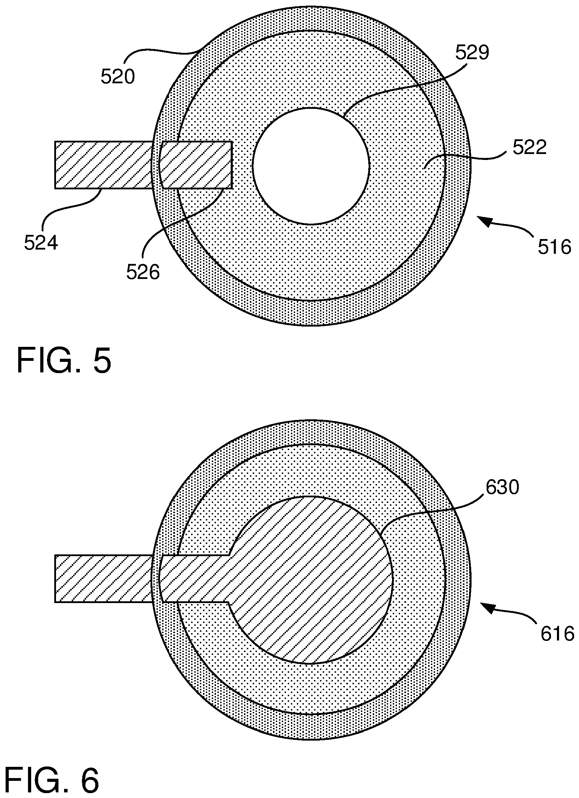

Referring now to FIG. 5, a top view of a drain for a water recycling device is illustrated. Here, the recycling pipe 524 extends into the water buffer 516.

The water buffer 516 may have a circular cross section when viewed along the direction of gravity when the drain is in use. However, different shaped cross sections of the water buffer 516 are also possible, such as rectangular cross sections, or any other cross section having a geometrical shape of a polygon. The recycling pipe 524 may extend at least to the edge of the buffer outlet 529. The recycling pipe 524 may extend at least to an opposite edge of the water buffer 516 with respect to an entry point of the recycling pipe 524 in the water buffer 516 and the outer wall element 520. The recycling pipe 524 may extend a length of the bottom surface 522. A top view of the buffer outlet 529 may be circular as shown in FIG. 5. A top view of the buffer outlet 529 may be in the shape of a semi-circle, a square, or any other geometrical shape. Similarly, a top view of the recycling pipe intake 526 may be in the shape of a circle, a ring, a semi-circle, a square, or any other geometrical shape.

Referring now to FIG. 6, a top view of a drain for a water recycling device is illustrated. Here, the diverter 630 is shown. The diverter 630 may comprise a surface arranged above the buffer outlet (not shown) of the water buffer 616. The surface may be arranged such that a projection of the surface along a direction of gravity when the drain is in use at least partially covers the buffer outlet (not shown). In this illustration, a direction of gravity is pointing inwards into the illustration.

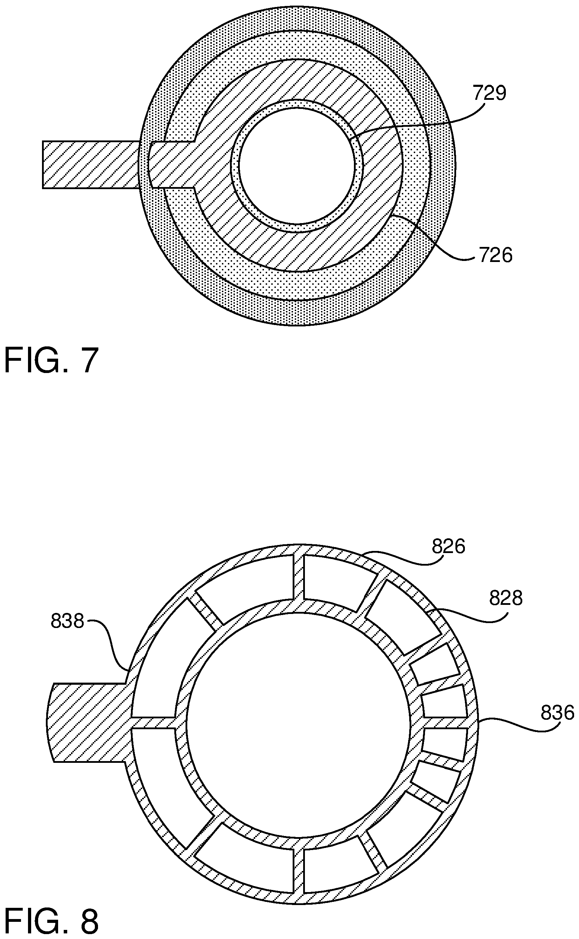

Referring now to FIG. 7, a top view of an alternative recycling pipe intake 726 is illustrated. Here, the recycling pipe intake 726 encloses the buffer outlet 729. The recycling pipe intake 726 may at least partially enclose the buffer outlet 729. This arrangement may provide for that an area of the pre-filter of the recycling pipe intake 726 is increased.

Referring now to FIG. 8, a bottom view of an alternative recycling pipe intake 826 is illustrated. The recycling pipe intake 826 may comprise a number of open ends 828. The recycling pipe intake 826 may have an annular cross section. The number of open ends 828 may be larger at a proximal end 838 of the recycle pipe intake 826 compared to a distal end 836 of the recycling pipe intake 826. The number of open ends 828 may become increasingly larger from the distal end 836 to the proximal end 838. Hereby, collected water in the water buffer may be drawn into the recycling pipe via the recycling pipe intake 826 at different flow rates with respect to a location of the number of open ends 828. Consequently, a circular flow of water in the water buffer as described below may be facilitated. In other words, the number of open ends 828 may provide for that a vortex of water is formed in the water buffer.

According to the invention the water buffer comprises a number of angled flaps such that water entering the water buffer via the drain inlet is set in a circular motion in the water buffer. In other words, water entering the water buffer via the drain inlet may be diverted by the number of angled flaps in a direction such that a circular flow is created in the water buffer. As a result of the circular flow, water in the water buffer may be directed towards an outer edge of the water buffer and/or towards the outer wall element of the water buffer. Such a circular flow of water may be referred to as a vortex. Hereby, water in the water buffer may be prevented from entering the buffer outlet arranged in a center of the water buffer. This effect may be facilitated by drawing water from the water buffer into the water recycling device via the recycling pipe intake. An advantage of this arrangement is that a water quality measure of water in the water buffer may be detected by the sensor arrangement before water is allowed to enter the buffer outlet. The number of angled flaps is arranged in the water buffer.

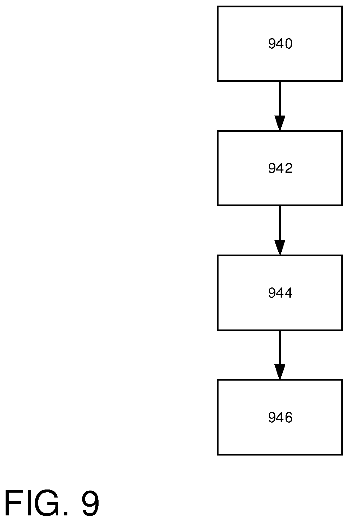

Referring now to FIG. 9, a method for collecting water to be recycled in a drain of a water recycling device is illustrated in a flow chart diagram. The method comprises the step 940 of collecting used water in a water buffer; the step 942 of determining a water quality measure of the collected water; the step 944 of, if the water quality measure of the collected water is above a quality threshold, feeding at least a portion of the collected water via the recycling pipe to the water recycling device; and the step 946 of, if the water quality measure of the collected water is below a quality threshold, allowing at least a portion of the collected water to flow via the buffer outlet to a drain discard path of the water recycling device.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

### List of reference signs

- 100: Water recycling device
- 102: Outlet
- 104: Drain
- 106: Drain discard path
- 108: Recirculation loop
- 109: Valve arrangement
- 110: Circulation pump
- 111: External water path
- 112: Water treatment arrangement
- 200: Drain
- 213: Grating
- 214: Drain inlet
- 216: Water buffer
- 218: Drain discard path
- 220: Outer wall element
- 222: Bottom surface
- 224: Recycling pipe
- 226: Recycling pipe intake
- 228: Open end
- 229: Buffer outlet
- 230: Diverter
- 232: Water trap
- 300: Drain
- 334: Inner wall element
- 400: Drain
- 429: Buffer outlet
- 516: Water buffer
- 520: Outer wall element
- 522: Bottom surface
- 524: Recycling pipe
- 526: Recycling pipe intake
- 529: Buffer outlet
- 616: Water buffer
- 630: Diverter
- 726: Recycling pipe intake
- 729: Buffer outlet
- 826: Recycling pipe intake
- 828: Open end
- 836: Distal end
- 838: Proximal end
- 940: Step of collecting used water
- 942: Step of determining a water quality measure
- 944: Step of feeding at least a portion of collected water via recycling pipe to water recycling device
- 946: Step of allowing at least a portion of collected water to flow via buffer outlet to drain discard path

## Claims

1. A drain (104) for a water recycling device (100), said drain (104) comprising
a drain inlet (214) configured to receive used water from an outlet (102) of said water recycling device (100);
a water buffer (216) configured to hold a volume of water, wherein said water buffer (216) comprises an outer wall element (220) and a bottom surface (222);
a recycling pipe (224) comprising a recycling pipe intake (226), said recycling pipe intake (226) comprising an open end (228), wherein said recycling pipe (224) and said recycling pipe intake (226) are configured to receive used water to be recycled from said water buffer (216); and
a buffer outlet (229) configured to output water from said water buffer (216),
said drain (104) being **characterized by** that further comprising a number of angled flaps arranged in said water buffer (216) such that water received by said water buffer (216) via said drain inlet (214) is set in a circular motion in said water buffer (216).

2. The drain (104) according to claim 1, further comprising a diverter (230) configured to divert said used water to said water buffer (216), and to prevent said used water from entering said buffer outlet (229) without passing said water buffer (216).

3. The drain (104) according to any one of the preceding claims, wherein said open end (228) of said recycling pipe intake (226) is directed towards said bottom surface (222) of said water buffer (216).

4. The drain (104) according to any one of the preceding claims, wherein said water buffer (216) further comprises an inner wall element (334), wherein said outer wall element (220) and/or said bottom surface (222) and/or said inner wall element (334) are arranged to form a barrier preventing said volume of water from entering said buffer outlet (229).

5. The drain (104) according to any one of the preceding claims, wherein said recycling pipe intake (226) at least partially enclose said buffer outlet (229).

6. The drain (104) according to any one of the preceding claims, wherein said water buffer (216) comprises a draining channel configured to allow a flow of water from said water buffer (216) to said buffer outlet (229).

7. The drain (104) according to any one of the preceding claims, wherein said recycling pipe intake (226) comprises a pre-filter.

8. A water recycling device (100) comprising
an outlet (102) configured to output treated water;
a drain (104) according to any one of claims 1 to 7 for collecting used water output from said outlet (102);
a drain discard path (106) arranged downstream of said drain (104);
a recirculation loop (108) in liquid communication with said drain (104) and said outlet (102), said recirculation loop (108) comprising a water treatment arrangement (112) for treating said used water; and
a circulation pump (110) for providing a flow in said water recycling device (100).

9. The water recycling device (100) according to claim 8, wherein said water recycling device (100) is a shower.

10. A method for collecting water to be recycled in a drain (104) of a water recycling device (100), said drain (104) comprising:
a drain inlet (214) configured to receive used water from an outlet (102) of said water recycling device (100);
a water buffer (216) configured to hold a volume of water, wherein said water buffer (216) comprises an outer wall element (220) and a bottom surface (222);
a recycling pipe (224) comprising an recycling pipe intake (226), wherein said recycling pipe (224) is configured to receive used water to be recycled from the water buffer (216); and
a buffer outlet (229);
said drain (104) being **characterized by** that further comprising a number of angled flaps arranged in said water buffer (216) such that water received by said water buffer (216) via said drain inlet (214) is set in a circular motion in said water buffer (216), wherein said method comprises the steps of:
collecting said used water in said water buffer (216);
determining a water quality measure of said collected water;
if said water quality measure of said collected water is above a quality threshold, feeding said collected water via said recycling pipe (224) to said water recycling device (100);
if said water quality measure of said collected water is below a quality threshold, allowing said collected water to flow via said buffer outlet (229) to a drain discard path (218) of said water recycling device (100).

## Patentansprüche

1. Abfluss (104) für eine Wasserrecyclingvorrichtung (100), wobei der Abfluss (104) Folgendes umfasst:
einen Abflusseinlass (214), der dazu ausgelegt ist, gebrauchtes Wasser aus einem Auslass (102) der Wasserrecyclingvorrichtung (100) zu empfangen;
einen Wasserpuffer (216), der dazu ausgelegt ist, ein Wasservolumen aufzunehmen, wobei der Wasserpuffer (216) ein äußeres Wandelement (220) und eine Bodenfläche (222) umfasst;
ein Recyclingrohr (224), das einen Recyclingrohreinlass (226) umfasst, wobei der Recyclingrohreinlass (226) ein offenes Ende (228) umfasst, wobei das Recyclingrohr (224) und der Recyclingrohreinlass (226) dazu ausgelegt sind, gebrauchtes Wasser, das recycelt werden soll, aus dem Wasserpuffer (216) zu empfangen; und
einen Pufferauslass (229), der dazu ausgelegt ist, Wasser aus dem Wasserpuffer (216) auszugeben,
wobei der Abfluss (104) **dadurch gekennzeichnet ist, dass** er ferner eine Anzahl von abgewinkelten Klappen umfasst, die in dem Wasserpuffer (216) so angeordnet sind, dass Wasser, das aus dem Wasserpuffer (216) über den Abflusseinlass (214) empfangen wird, in eine kreisförmige Bewegung in dem Wasserpuffer (216) versetzt wird.

2. Abfluss (104) gemäß Anspruch 1, ferner umfassend einen Umleiter (230), der dazu ausgelegt ist, das gebrauchte Wasser zu dem Wasserpuffer (216) umzuleiten und zu verhindern, dass das gebrauchte Wasser in den Pufferauslass (229) eintritt, ohne den Wasserpuffer (216) zu passieren.

3. Abfluss (104) gemäß einem der vorhergehenden Ansprüche, wobei das offene Ende (228) des Recyclingrohreinlasses (226) zur Bodenfläche (222) des Wasserpuffers (216) gerichtet ist.

4. Abfluss (104) gemäß einem der vorhergehenden Ansprüche, wobei der Wasserpuffer (216) ferner ein inneres Wandelement (334) umfasst, wobei das äußere Wandelement (220) und/oder die Bodenfläche (222) und/oder das innere Wandelement (334) so angeordnet sind, dass sie eine Barriere bilden, die verhindert, dass das Wasservolumen in den Pufferauslass (229) eintritt.

5. Abfluss (104) gemäß einem der vorhergehenden Ansprüche, wobei der Recyclingrohreinlass (226) den Pufferauslass (229) mindestens teilweise umschließt.

6. Abfluss (104) gemäß einem der vorhergehenden Ansprüche, wobei der Wasserpuffer (216) einen Abflusskanal umfasst, der dazu ausgelegt ist, einen Wasserfluss aus dem Wasserpuffer (216) zum Pufferauslass (229) zu ermöglichen.

7. Abfluss (104) gemäß einem der vorhergehenden Ansprüche, wobei der Recyclingrohreinlass (226) einen Vorfilter umfasst.

8. Wasserrecyclingvorrichtung (100), umfassend:
einen Auslass (102), der dazu ausgelegt ist, aufbereitetes Wasser auszugeben;
einen Abfluss (104) gemäß einem der Ansprüche 1 bis 7 zum Auffangen von gebrauchtem Wasser aus dem Auslass (102) ;
einen stromabwärts des Abflusses (104) angeordneten Abflussableitungspfad (106);
eine Umwälzschleife (108) in Flüssigkeitsverbindung mit dem Abfluss (104) und dem Auslass (102), wobei die Umwälzschleife (108) eine Wasseraufbereitungsanordnung (112) zum Aufbereiten des gebrauchten Wassers umfasst; und
eine Umwälzpumpe (110) zum Erzeugen einer Strömung in der Wasserrecyclingvorrichtung (100).

9. Wasserrecyclingvorrichtung (100) gemäß Anspruch 8, wobei die Wasserrecyclingvorrichtung (100) eine Dusche ist.

10. Verfahren zum Auffangen von zu recycelndem Wasser in einem Abfluss (104) einer Wasserrecyclingvorrichtung (100), wobei der Abfluss (104) Folgendes umfasst:
einen Abflusseinlass (214), der dazu ausgelegt ist, gebrauchtes Wasser aus einem Auslass (102) der Wasserrecyclingvorrichtung (100) zu empfangen;
einen Wasserpuffer (216), der dazu ausgelegt ist, ein Wasservolumen aufzunehmen, wobei der Wasserpuffer (216) ein äußeres Wandelement (220) und eine Bodenfläche (222) umfasst;
ein Recyclingrohr (224), das einen Recyclingrohreinlass (226) umfasst, wobei das Recyclingrohr (224) dazu ausgelegt ist, gebrauchtes Wasser, das recycelt werden soll, aus dem Wasserpuffer (216) zu empfangen; und
einen Pufferauslass (229);
wobei der Abfluss (104) **dadurch gekennzeichnet ist, dass** er ferner eine Anzahl von abgewinkelten Klappen umfasst, die in dem Wasserpuffer (216) so angeordnet sind, dass Wasser, das aus dem Wasserpuffer (216) über den Abflusseinlass (214) empfangen wird, in eine kreisförmige Bewegung in dem Wasserpuffer (216) versetzt wird, wobei das Verfahren die folgenden Schritte umfasst:
Auffangen des gebrauchten Wassers in dem Wasserpuffer (216);
Bestimmen eines Wasserqualitätsmaßes des aufgefangenen Wassers;
wenn das Wasserqualitätsmaß des aufgefangenen Wassers oberhalb eines Qualitätsschwellenwertes liegt, Leiten des aufgefangenen Wassers über das Recyclingrohr (224) zur Wasserrecyclingvorrichtung (100);
wenn das Wasserqualitätsmaß des aufgefangenen Wassers unterhalb eines Qualitätsschwellenwertes liegt, Zulassen, dass das aufgefangene Wasser über den Pufferauslass (229) zu einem Abflussableitungspfad (218) der Wasserrecyclingvorrichtung (100) fließt.

## Revendications

1. Drain (104) destiné à un dispositif de recyclage d'eau (100), ledit drain (104) comprenant
une entrée de drain (214) conçue pour recevoir de l'eau usée provenant d'une sortie (102) dudit dispositif de recyclage d'eau (100) ;
un tampon d'eau (216) conçu pour contenir un volume d'eau, ledit tampon d'eau (216) comprenant un élément de paroi externe (220) et une surface inférieure (222) ;
un tuyau de recyclage (224) comprenant une entrée de tuyau de recyclage (226), ladite entrée de tuyau de recyclage (226) comprenant une extrémité ouverte (228), ledit tuyau de recyclage (224) et ladite entrée de tuyau de recyclage (226) étant conçus pour recevoir de l'eau usée à recycler provenant dudit tampon d'eau (216) ; et
une sortie de tampon (229) conçue pour évacuer l'eau dudit tampon d'eau (216),
ledit drain (104) étant **caractérisé en ce qu'**il comprend en outre un certain nombre de clapets angulaires disposés dans ledit tampon d'eau (216) de sorte que l'eau reçue par ledit tampon d'eau (216) par l'intermédiaire de ladite entrée de drain (214) soit placée dans un mouvement circulaire dans ledit tampon d'eau (216).

2. Drain (104) selon la revendication 1, comprenant en outre un partiteur (230) conçu pour dévier ladite eau usée vers ledit tampon d'eau (216), et pour empêcher ladite eau usée d'entrer dans ladite sortie de tampon (229) sans passer par ledit tampon d'eau (216).

3. Drain (104) selon l'une quelconque des revendications précédentes, ladite extrémité ouverte (228) de ladite entrée de tuyau de recyclage (226) étant dirigée vers ladite surface inférieure (222) dudit tampon d'eau (216).

4. Drain (104) selon l'une quelconque des revendications précédentes, ledit tampon d'eau (216) comprenant en outre un élément de paroi interne (334), ledit élément de paroi externe (220) et/ou ladite surface inférieure (222) et/ou ledit élément de paroi interne (334) étant conçus pour former une barrière empêchant ledit volume d'eau d'entrer dans ladite sortie de tampon (229) .

5. Drain (104) selon l'une quelconque des revendications précédentes, ladite entrée de tuyau de recyclage (226) enfermant au moins partiellement ladite sortie de tampon (229).

6. Drain (104) selon l'une quelconque des revendications précédentes, ledit tampon d'eau (216) comprenant un canal de drainage conçu pour permettre un écoulement d'eau dudit tampon d'eau (216) à ladite sortie de tampon (229).

7. Drain (104) selon l'une quelconque des revendications précédentes, ladite entrée de tuyau de recyclage (226) comprenant un pré-filtre.

8. Dispositif de recyclage d'eau (100) comprenant
une sortie (102) conçue pour évacuer l'eau traitée ;
un drain (104) selon l'une quelconque des revendications 1 à 7 pour collecter l'eau usée sortant de ladite sortie (102) ;
un trajet de rejet de drain (106) disposé en aval dudit drain (104) ;
une boucle de recirculation (108) en communication liquide avec ledit drain (104) et ladite sortie (102), ladite boucle de recirculation (108) comprenant un dispositif de traitement de l'eau (112) pour traiter ladite eau usée ; et
une pompe de circulation (110) pour produire un flux dans ledit dispositif de recyclage d'eau (100).

9. Dispositif de recyclage d'eau (100) selon la revendication 8, ledit dispositif de recyclage d'eau (100) étant une douche.

10. Procédé pour collecter l'eau à recycler dans un drain (104) d'un dispositif de recyclage d'eau (100), ledit drain (104) comprenant :
une entrée de drain (214) conçue pour recevoir de l'eau usée provenant d'une sortie (102) dudit dispositif de recyclage d'eau (100) ;
un tampon d'eau (216) conçu pour contenir un volume d'eau, ledit tampon d'eau (216) comprenant un élément de paroi externe (220) et une surface inférieure (222) ;
un tuyau de recyclage (224) comprenant une entrée de tuyau de recyclage (226), ledit tuyau de recyclage (224) étant conçu pour recevoir de l'eau usée à recycler provenant du tampon d'eau (216) ; et
une sortie de tampon (229) ;
ledit drain (104) étant **caractérisé en ce qu'**il comprend en outre un certain nombre de clapets inclinés disposés dans ledit tampon d'eau (216) de sorte que l'eau reçue par ledit tampon d'eau (216) par l'intermédiaire de ladite entrée de drain (214) soit placée dans un mouvement circulaire dans ledit tampon d'eau (216), ledit procédé comprenant les étapes consistant à :
collecter ladite eau usée dans ledit tampon d'eau (216) ;
déterminer une mesure de qualité d'eau de ladite eau collectée ;
si ladite mesure de qualité d'eau de ladite eau collectée est supérieure à un seuil de qualité, fournir ladite eau collectée par l'intermédiaire dudit tuyau de recyclage (224) audit dispositif de recyclage d'eau (100) ;
si ladite mesure de qualité d'eau de ladite eau collectée est inférieure à un seuil de qualité, permettre à ladite eau collectée de s'écouler par l'intermédiaire de ladite sortie tampon (229) vers un trajet de rejet d'évacuation (218) dudit dispositif de recyclage d'eau (100) .
